# EUROPEAN PATENT SPECIFICATION

(11) **EP 3 692 798 B1**
(45) Date of publication and mention of the grant of the patent: **31.07.2024**
(21) Application number: 18865009.7
(22) Date of filing: 11.09.2018
(51) Int. Cl.: A23G 1/00, A23L 33/115, A23G 1/36

(54) **WHITE CHOCOLATE-LIKE FOOD CONTAINING HIGHLY UNSATURATED FATTY ACID**
WEISSER SCHOKOLADE ÄHNLICHES LEBENSMITTEL MIT HOCHGRADIG UNGESÄTTIGTER FETTSÄURE
ALIMENT DE TYPE CHOCOLAT BLANC CONTENANT UN ACIDE GRAS HAUTEMENT INSATURÉ

(30) Priority: 05.10.2017 JP 2017194935
(43) Date of publication of application: 12.08.2020
(73) Proprietor: Fuji Oil Holdings Inc., Izumisano-shi, Osaka 598-8540 (JP)
(72) Inventor: FUJITA, Tomoko, Tsukubamirai-shi Ibaraki 300-2436 (JP); KATO, Masaharu, Izumisano-shi Osaka 598-8540 (JP)
(74) Representative: Boult Wade Tennant LLP
(86) International application number: PCT/JP2018/033533
(87) International publication number: WO 2019/069636

(56) References cited:
- EP-A1- 3 069 615
- EP-B1- 3 069 615
- WO-A1-2016/194558
- WO-A1-2016/194558
- WO-A1-2017/150558
- WO-A1-2017/150559
- WO-A1-2017/150559
- WO-A1-2017/208741
- WO-A1-2017/208741
- WO-A1-2018/163587
- JP-A- H0 347 038
- JP-A- H0 347 038
- JP-A- H05 292 885

## Description

### TECHNICAL FIELD

The present disclosure relates to a white chocolate-like food containing highly unsaturated fatty acid-containing fats and oils.

### BACKGROUND

Chocolate-like foods, typified by chocolate, are favored also by children. Thus, by incorporating specific nutritional components into a chocolate-like food, it is possible for the nutritional components to be easily taken by children.

Highly unsaturated fatty acids represented by DHA or EPA are materials attracting attention for their physiological effects. However, highly unsaturated fatty acids are prone to oxidative degradation, often making it difficult to incorporate them into general food products.

Patent Document 1 describes "a chocolate composition characterized by containing non-hydrogenated fats and oils including eicosapentaenoic acid and/or docosahexaenoic acid, and at least one of the catechins."

Patent Document 2 describes "a highly unsaturated fatty acid-containing food characterized by containing coated fats and oils which are obtained by coating fats and oils containing highly unsaturated fatty acids with an edible film-forming substance comprised of proteins or salts thereof, lipids, or a combination thereof such that the fats and oils are substantially blocked from outside air, and which are in the form of particulates with a diameter of 2 mm or less."

### [Prior Art Documents]

### Patent Documents

Patent Document 1: JP H5-292885 A
Patent Document 2: JP S59-17949 A

WO 2017/208741 relates to a chocolate-like food containing a highly unsaturated fatty acid-containing fat or oil, where the chocolate-like food is suppressed in change in the flavor over time. The change in the flavor over time of a chocolate-like food containing a highly unsaturated fatty acid-containing fat or oil is suppressed by adjusting the pH thereof to a value within a predetermined range.

WO2017/150559 relates to a chocolate-like food product containing polyunsaturated-fatty-acid-containing oil and fat and an amino acid to reduce the unpleasant odor that occurs with time.

WO 2016/194558 relates to suppressing aging deterioration in the flavor of a chocolate-like food, which contains a highly unsaturated fatty acid-containing fat or oil, by adding a water-soluble antioxidant not to a highly unsaturated fatty acid-containing fat or oil but before a pulverizing step. JP H0347038 relates to an oil phase containing oils and fats containing an unsaturated fatty acid having ≥ 3 double bonds as a constituent fatty acid is blended with a water phase controlled to pH7.0-8.2 and the blend is emulsified to prepare the oil and fat composition having plasticity.

EP 3 069 615 relates to a highly versatile fat containing a polyunsaturated fatty acid and a foodstuff in which said fat is used, said fat having good flavor and exceptional oxidation stability.

### SUMMARY

The present disclosure relates to a white chocolate-like food containing highly unsaturated fatty acid-containing fats and oils, and the present disclosure is to provide such a white chocolate-like food in which change in flavor over time is suppressed.

The inventors conducted extensive studies in order to solve the problem.

The method described in Patent Document 1 appears to show an effect of suppressing changes over time to some extent, but a stronger effect is required because the best before period of a chocolate-like food is relatively long.

In the method described in Patent Document 2, the highly unsaturated fatty acid is added in the form of capsules. Accordingly, it is difficult to apply the method to foods such as chocolate-like foods for which a smooth mouthfeel is important.

The inventors then conducted further studies. As a result, the inventors found that when the pH of a white chocolate-like food containing highly unsaturated fatty acid-containing fats and oils is adjusted to 3 to 6.2, it is possible to suppress change in flavor over time, thereby completing the present disclosure.

Thus, the present disclosure relates to the following:
(1) A white chocolate-like food comprising a highly unsaturated fatty acid-containing fat and oil composition such that a combined amount of EPA and DHA in the food is 0.02 to 5 % by weight, wherein a pH of the food has been adjusted to 3 to 6.2, wherein the white chocolate-like food does not comprise cocoa powder.
(2) The white chocolate-like food of (1), wherein the pH has been adjusted by an acid or alkaline agent.
(3) A process for producing the white chocolate-like food according to (1), comprising incorporating the highly unsaturated fatty acid-containing fat and oil composition such that the combined amount of EPA and DHA in the food is 0.02 to 5 % by weight, and adjusting the pH of the food to 3 to 6.2.
(4) A process for producing the white chocolate-like food according to (2), comprising incorporating the highly unsaturated fatty acid-containing fat and oil composition such that the combined amount of EPA and DHA in the food is 0.02 to 5 % by weight, and adjusting the pH of the food to 3 to 6.2.
(5) The process of (3), wherein the pH is adjusted by using an acid or alkaline agent.
(6) The process of (4), wherein the pH is adjusted by using an acid or alkaline agent.

According to the present disclosure, it is possible to suppress change in flavor over time in a white chocolate-like food containing highly unsaturated fatty acid-containing fats and oils.

### DETAILED DESCRIPTION

A chocolate-like food as used in the present disclosure refers to, for example, chocolates. In addition, chocolates referred to herein include not only chocolate, quasi-chocolate, and chocolate-based foods as defined by the National Chocolate Industry Fair Trade Association and the Chocolate-Based Food Fair Trade Association, but also foods in which fats and oils are contained as essential components and supplementary materials such as sugars, milk powders, cacao materials (cacao mass, cocoa, and cocoa butter), fruit juice powder, fruit powder, taste enhancers, emulsifiers, flavorings, coloring agents, etc. are incorporated in certain proportions as necessary.

Typical examples of chocolates include sweet chocolate, milk chocolate, and white chocolate. Also included are strawberry chocolate and the like, which are obtained by adding a fruit component to such a typical chocolate.

A white chocolate-like food as used in the present disclosure refers to a chocolate-like food which contains no or little, if any, cocoa powder. With respect to the amount, cocoa powder, may be contained in 0.8 % by weight or less, more preferably, 0.3 % by weight or less, and even more preferably, 0.1 % by weight or less based on nonfat cacao solids. Since the amount of nonfat cacao solids in the white chocolate-like food is small, stability, particularly at low pHs, is improved. This may be associated with the decrease in the influence of metal components present in nonfat cacao solids.

Highly unsaturated fatty acid-containing fats and oils as used in the present disclosure refer to fats and oils containing at least one highly unsaturated fatty acid as their fatty acids components. Here, a highly unsaturated fatty acid is also called a polyunsaturated fatty acid, and is a generic name for fatty acids containing many double bonds. Specific examples include DHA (docosahexaenoic acid) and EPA (eicosapentaenoic acid).

A white chocolate-like food according to the present disclosure needs to contain highly unsaturated fatty acid-containing fats and oils such that a combined amount of DHA and EPA in the food is 0.02 to 5 % by weight, preferably 0.02 to 3.5 % by weight, and more preferably 0.05 to 2 % by weight. The effect of highly unsaturated fatty acid-containing fats and oils can be expected when they are contained in an appropriate amount. Further, an oil containing such highly unsaturated fatty acid-containing fats and oils may be simply referred to as "PUFA oil."

In the present disclosure, a highly unsaturated fatty acid-containing fat and oil composition that has undergone an anti-oxidation treatment may be used as the highly unsaturated fatty acid-containing fats and oils. Details are described in WO2017/150558. However, the present disclosure also exhibits effects at some extent even when a highly unsaturated fatty acid-containing fat and oil composition that has not undergone such a treatment is used.

In a white chocolate-like food according to the present disclosure, it is necessary for the pH to be adjusted to 3 to 6.2. The pH may be specifically 3.1 to 6, and more specifically, 3.3 to 5.9. By adjusting the pH to an appropriate level, it is possible to suppress deterioration of flavor even when highly unsaturated fatty acid-containing fats and oils are contained.

Further, the pH of a white chocolate-like food is measured after the white chocolate-like food is dispersed in an appropriate amount of water. Specifically, the pH is measured by the following method.
1. A chocolate-like food is diluted 10-fold in ion-exchange water at 45 °C.
2. The chocolate-like food is dispersed to the extent that there are no agglomerates of size 1 mm or larger.
3. After centrifugation (4,000 rpm, 30 min), the aqueous supernatant is isolated.
4. The pH of the aqueous supernatant at 20 °C is measured.

The pH of a chocolate-like food may be adjusted by adding an acid or alkaline agent. Examples of suitable acids include hydrochloric acid, sulfuric acid, acetic acid, phosphoric acid, and organic acids. The acid may be acetic acid or an organic acid, and may be, preferably acetic acid.

Examples of suitable alkalis include sodium hydroxide, potassium hydroxide, calcium hydroxide, and magnesium hydroxide. The alkali may be sodium hydroxide or potassium hydroxide, and may be, preferably, sodium hydroxide.

For the adjustment of pH, it may be desirable to add an acid or alkali as an aqueous solution of a suitable concentration.

In addition, some foods are acidic or alkaline themselves. Such foods are also included in the acid or alkaline agent as used in the present disclosure if they are added for the purpose of pH adjustment.

Next, a process for producing a white chocolate-like food containing highly unsaturated fatty acid-containing fats and oils according to the present disclosure will be described below.

In the present disclosure, basically, preparation can be carried out according to a conventional white chocolate preparation method. That is, in addition to cacao butter and sugar, raw materials such as milk powder are mixed in as necessary. Further, fruits and the like may also be added.

The adjustment of pH is carried out by adding an acid or alkaline agent to the above-described mixture. The concentration of the acid or alkaline agent used may be suitably selected, and a suitable amount of the selected concentration of the agent is added.

The mixed raw materials are micronized by rollers and the like and additionally subjected to refining, in accordance with standard methods. At the end of this refining step, the highly unsaturated fatty acid-containing fats and oils are suitably added.

Then, tempering is carried out, followed by filling and cooling.

Examples will be described below.

### <Examples>

### Study 1 Preparation of an anti-oxidation treated highly unsaturated fatty acid-containing fat and oil composition

A highly unsaturated fatty acid-containing fat and oil composition was prepared based on the formulation shown in Table 1. A method of preparation according to "∘ Method of Preparing A Highly Unsaturated Fatty Acid-Containing Fat And Oil Composition" was used.

**[Table 1]**

| Formulation | | |
|---|---|---|
| Aqueous phase | Vitamin C | 0.5 |
| | Catechin | 1.5 |
| | Water | 2.7 |
| Oil phase | Soybean oil | 24.7 |
| | Emulsifier | 4.0 |
| | PUFA oil | 66.6 |
| Sum | | 100.0 |

### (Units in formulation are % by weight)

- For PUFA oil, a fat and oil containing 41.4 % by weight of DHA and EPA combined was used.
- For catechin, "Sunphenon 90S" manufactured by Taiyo Kagaku Co. Ltd. was used.
- For the emulsifier, "CRS-75" (polyglycerol condensed ricinoleic acid ester: PGPR) manufactured by Sakamoto Yakuhin Kogyo Co., Ltd. was used.
   ∘ Method of Preparing A Highly Unsaturated Fatty Acid-Containing Fat And Oil Composition
      1. Based on the formulation shown in Table 1, raw materials classified into the aqueous phase were mixed in to prepare an aqueous phase, and raw materials classified into the oil phase were mixed in to prepare an oil phase.
      2. The aqueous phase and the oil phase were admixed and then homogenized using a high pressure homogenizer to prepare "an anti-oxidation treated highly unsaturated fatty acid-containing fat and oil composition."

### Study 2 Preparation of a white chocolate-like food containing highly unsaturated fatty acids

Highly unsaturated fatty acid-containing fat and oil compositions were prepared based on the formulations shown in Table 2. A method of preparation according to "∘ Method of Preparing A White Chocolate-Like Food" was used.

The resulting samples were stored at 26 °C for 120 days and then provided to a sensory evaluation by 5 panelists.

The evaluation was conducted based on the following criteria, and the evaluation results were determined by consultation. The results are shown in Table 3.

**[Table 2]**

| Formulations | | | | | | | | | | | |
|---|---|---|---|---|---|---|---|---|---|---|---|
| | | Comp . Ex. 2-1 | Ex. 2-1 | Ex. 2-2 | Comp . Ex. 2-2 | Ex. 2-3 | Ex. 2-4 | Ex. 2-5 | Ex. 2-6 | Ex. 2-7 | Ex. 2-8 |
| Base chocola te | Whole milk powder | 26.69 | 26.69 | 26.69 | 26.50 | 26.50 | 26.50 | 26.69 | 26.69 | 26.50 | 26.50 |
| | Sugar | 41.35 | 41.35 | 41.35 | 41.03 | 41.03 | 41.03 | 41.35 | 41.35 | 41.03 | 41.03 |
| | Cocoa butter | 28.33 | 28.33 | 28.33 | 28.12 | 28.12 | 28.12 | 28.33 | 28.33 | 28.12 | 28.12 |
| | Lecithin | q.s. | q. s. | q.s. | q. s. | q.s. | q. s. | q.s. | q.s. | q. s. | q.s. |
| | Vanillin | q.s. | q. s. | q.s. | q. s. | q.s. | q. s. | q.s. | q.s. | q. s. | q.s. |
| Ion-exchange water | | 1 | 0.5 | - | 1 | 0.5 | - | 0.5 | 0.75 | 0.5 | 0.75 |
| Acid | | - | 0.5 | 1 | - | 0.5 | 1 | - | - | - | - |
| Alkaline agent | | - | - | - | - | - | - | 0.5 | 0.25 | 0.5 | 0.25 |
| Anti-oxidation treated, highly unsaturated fatty acid-containing fat and oil composition | | 2.63 | 2.63 | 2.63 | 2.63 | 2.63 | 2.63 | 2.63 | 2.63 | 2.63 | 2.63 |
| Soybean oil | - | - | - | 0.72 | 0.72 | 0.72 | | | 0.72 | 0.72 | |
| Sum | 100.0 0 | 100.0 0 | 100.0 0 | 100.0 0 | 100.0 0 | 100.0 0 | 100.0 0 | 100.0 0 | 100.0 0 | 100.0 0 | |
| pH | 6.4 | 5.8 | 5.32 | 6.4 | 5.8 | 5.32 | 7.5 | 7 | 7.5 | 7 | |

### (Units in formulation are % by weight)

- In the base chocolate, lecithin and vanillin were used in very small amounts, indicated as "q.s."
   ∘ Method of Preparing A White Chocolate-Like Food
      1. Dairy raw materials, sugars, various powder materials and a part of the fats and oils were admixed and milled using rollers.
      2. A part of the fats and oils was added to the milled product of 1., followed by conching.
      3. All the remaining raw materials were mixed in.
      4. The highly unsaturated fatty acid-containing fat and oil composition was added.

### Evaluation criteria

∘ The sample is considered to stand comparison with conventional white chocolate.
△ The sample is considered acceptable despite a slight off-flavor.
× The sample is considered unacceptable due to an off-flavor.
△ and ∘ were judged as acceptable.

**[Table 3]**

| Results | | | | | | | | | | |
|---|---|---|---|---|---|---|---|---|---|---|
| | Comp. Ex. 2-1 | Ex. 2-1 | Ex. 2-2 | Comp. Ex. 2-2 | Ex. 2-3 | Ex. 2-4 | Ex. 2-5 | Ex. 2-6 | Ex. 2-7 | Ex. 2-8 |
| Evaluation result | × | Δ | Δ | × | Δ | Δ | ○ | ○ | ○ | ○ |

### Discussion

In each sample of chocolate-like food, DHA and EPA were contained in a combined amount of 1.09 % by weight.

As shown in Table 3, when the pH is adjusted to a predetermined range, it was possible to obtain a white chocolate-like food in which the generation of an off-flavor originated from PUFAs is suppressed.

Study 3 Preparation of a white chocolate-like food containing highly unsaturated fatty acids 2

Highly unsaturated fatty acid-containing fat and oil compositions were prepared based on the formulations shown in Table 4. A method of preparation according to "∘ Method of Preparing A White Chocolate-Like Food" was used.

As for the anti-oxidation treated highly unsaturated fatty acid-containing fat and oil composition, the composition prepared in Study 1 was used.

The resulting samples were stored at 26 °C for 120 days and then provided to a sensory evaluation by 5 panelists.

The evaluation was conducted based on the criteria described in Study 2, and the evaluation results were determined by consultation. The results are shown in Table 5. Examples 3-4 and 3-5 are Comparative Examples.

**[Table 4]**

| Formulations | | | | | | |
|---|---|---|---|---|---|---|
| | | Ex. 3-1 | Ex. 3-2 | Ex. 3-3 | Ex. 3-4 | Ex. 3-5 |
| Base chocolate | Vegetable fats and oils | 43.65 | 43.65 | 54.10 | - | - |
| | Butter oil | - | - | - | - | 3.42 |
| | Cocoa butter | - | - | 2.05 | 34.46 | 34.17 |
| | Whole milk powder | 11.62 | 11.72 | - | 11.72 | 15.82 |
| | Skim milk powder | - | - | 5.86 | 5.57 | 8.30 |
| | Sugar | 28.71 | - | 19.53 | 28.32 | 28.32 |
| | Whey powder | - | - | - | 2.93 | 7.62 |
| | Lactose | 6.35 | 34.96 | 14.16 | - | - |
| | Strawberry powder | 7.32 | - | 1.95 | - | - |
| | Cassis powder | - | 7.32 | - | - | - |
| | Caramel powder | - | - | - | 14.65 | - |
| | Acidulant (Citric acid) | - | - | q.s. | - | - |
| | Emulsifier | q.s. | q.s. | q.s. | q.s. | q.s. |
| | Flavor | q.s. | q.s. | q.s. | q.s. | q.s. |
| Anti-oxidation treated, highly unsaturated fatty acid-containing fat and oil composition | | 2.35 | 2.35 | 2.35 | 2.35 | 2.35 |
| Sum | | 100.00 | 100.00 | 100.00 | 100.00 | 100.00 |
| pH | | 5.8 | 4.6 | 3.4 | 6.8 | 7.0 |

### (Units in formulation are % by weight)

- In the base chocolate, the emulsifier, flavor, and acidulant were used in very small amounts, indicated as "q.s."
- For the vegetable fats and oils, a blend of "refined rapeseed oil, refined soybean oil, and Merano NEWSS7" manufactured by Fuji Oil Co., Ltd. was used.
- For the whey powder, "Confectionary Powder I" manufactured by Megmilk Snow Brand Co., Ltd. was used.
- For the strawberry powder, "Strawberry Powder C23" manufactured by Sato Foods Industries Co., Ltd. was used.
- For the cassis powder, "Cassis Powder D28" manufactured by Sato Foods Industries Co., Ltd. was used.
- For the caramel powder, "Caramel Powder" manufactured by Tsukuba Dairy Products was used.
- For the emulsifier, lecithin was used.

**[Table 5]**

| Results | | | | | |
|---|---|---|---|---|---|
| | Ex. 3-1 | Ex. 3-2 | Ex. 3-3 | Ex. 3-4 | Ex. 3-5 |
| Evaluation result | ○ | ○ | ○ | ○ | ○ |

### Discussion

- In each sample of chocolate-like food, DHA and EPA were contained in a combined amount of 0.97 % by weight.
- As shown in Table 5, a tendency that deterioration of flavor is also suppressed in samples where the pH was adjusted by strawberry powder or the like was confirmed.

## Claims

1. A white chocolate-like food, comprising a highly unsaturated fatty acid-containing fat and oil composition such that a combined amount of EPA and DHA in the food is 0.02 to 5 % by weight,
wherein a pH of the food has been adjusted to 3 to 6.2,
wherein the white chocolate-like food does not comprise cocoa powder.

2. The white chocolate-like food of Claim 1, wherein the pH has been adjusted by an acid or alkaline agent.

3. A process for producing the white chocolate-like food according to Claim 1, comprising:
incorporating the highly unsaturated fatty acid-containing fat and oil composition such that the combined amount of EPA and DHA in the food is 0.02 to 5 % by weight; and
adjusting the pH of the food to 3 to 6.2,.

4. A process for producing the white chocolate-like food according to Claim 2, comprising:
incorporating the highly unsaturated fatty acid-containing fat and oil composition such that the combined amount of EPA and DHA in the food is 0.02 to 5 % by weight; and
adjusting the pH of the food to 3 to 6.2.

5. The process of Claim 3, wherein the pH is adjusted by using an acid or alkaline agent.

6. The process of Claim 4, wherein the pH is adjusted by using the acid or alkaline agent.

## Patentansprüche

1. Weißer Schokolade ähnliches Nahrungsmittel, umfassend eine Fett- und Ölzusammensetzung mit einem solchen Gehalt an hoch ungesättigten Fettsäuren, dass die kombinierte Menge an EPA und DHA in dem Nahrungsmittel 0,02 bis 5 Gew.-% beträgt,
wobei der pH-Wert des Lebensmittels auf 3 bis 6,2 eingestellt wurde, und
wobei das weißer Schokolade ähnliche Nahrungsmittel kein Kakaopulver enthält.

2. Weißer Schokolade ähnliches Nahrungsmittel nach Anspruch 1, bei dem der pH-Wert durch ein saures oder alkalisches Mittel eingestellt wurde.

3. Verfahren zur Herstellung des weißer Schokolade ähnlichen Nahrungsmittels nach Anspruch 1, mit den Schritten:
Einbringen der hochungesättigte Fettsäuren enthaltenden Fett- und Ölzusammensetzung, so dass die kombinierte Menge an EPA und DHA in dem Lebensmittel 0,02 bis 5 Gew.-% beträgt; und
Einstellen des pH-Werts des Lebensmittels auf 3 bis 6,2.

4. Verfahren zur Herstellung des weißer Schokolade ähnlichen Lebensmittels nach Anspruch 2, mit den Schritten:
Einbringen der hochungesättigte Fettsäuren enthaltenden Fett- und Ölzusammensetzung, so dass die kombinierte Menge an EPA und DHA in dem Lebensmittel 0,02 bis 5 Gew.-% beträgt; und
Einstellen des pH-Werts des Lebensmittels auf 3 bis 6,2.

5. Verfahren nach Anspruch 3, bei dem der pH-Wert durch Verwendung eines sauren oder alkalischen Mittels eingestellt wird.

6. Verfahren nach Anspruch 4, bei dem der pH-Wert durch Verwendung eines sauren oder alkalischen Mittels eingestellt wird.

## Revendications

1. Aliment de type chocolat blanc, comprenant une composition de graisse et d'huile contenant un acide gras hautement insaturé de sorte qu'une quantité combinée d'EPA et de DHA dans l'aliment soit de 0,02 à 5 % en poids,
dans lequel un pH de l'aliment a été ajusté à 3 à 6,2,
dans lequel l'aliment de type chocolat blanc ne comprend pas de poudre de cacao.

2. Aliment de type chocolat blanc selon la revendication 1, dans lequel le pH a été ajusté par un agent acide ou alcalin.

3. Procédé de production de l'aliment de type chocolat blanc selon la revendication 1, comprenant :
l'incorporation de la composition de graisse et d'huile contenant un acide gras hautement insaturé de sorte que la quantité combinée d'EPA et de DHA dans l'aliment soit de 0,02 à 5 % en poids ; et
l'ajustement du pH de l'aliment à 3 à 6,2.

4. Procédé de production de l'aliment de type chocolat blanc selon la revendication 2, comprenant :
l'incorporation de la composition de graisse et d'huile contenant un acide gras hautement insaturé de sorte que la quantité combinée d'EPA et de DHA dans l'aliment soit de 0,02 à 5 % en poids ; et
l'ajustement du pH de l'aliment à 3 à 6,2.

5. Procédé selon la revendication 3, dans lequel le pH est ajusté en utilisant un agent acide ou alcalin.

6. Procédé selon la revendication 4, dans lequel le pH est ajusté en utilisant l'agent acide ou alcalin.
